# EUROPÄISCHE PATENTANMELDUNG

(11) **EP 2 067 717 A1**
(43) Veröffentlichungstag der Anmeldung: **10.06.2009**
(21) Anmeldenummer: 08021027.1
(22) Anmeldetag: 04.12.2008
(51) Int. Cl.: B65D 77/20, B29C 65/18

(54) **Wiederverschließbare Verpackung**

(30) Priorität: 06.12.2007 DE 102007059189
(71) Anmelder: Wipak Walsrode GmbH & Co. KG, 29699 Bomlitz (DE)
(72) Erfinder: Jacobsen, Sven, Dr., 29683 Bad Fallingbostel (DE); Nelke, Dorit, Dr., 29683 Bad Fallingbostel (DE)
(74) Vertreter: Kutzenberger, Helga

(57) **Zusammenfassung**

Die vorliegende Erfindung betrifft eine wiederverschließbare Verpackung aus zwei miteinander durch Versiegeln verbundenen Verpackungselementen (1,9), wovon eines der beiden Verpackungselemente (1) eine Mehrschichtfolie umfassend eine ggf. mehrlagige Siegelschicht (2), eine Haftklebstoffschicht (4) und eine Trägerschicht (3) und das zweite Verpackungselement (9) ein filmförmiges Kunststoffmaterial mit oder ohne Siegelschicht (2') aufweist, und wobei die Verpackung zumindest an dem näher zum verpackten Füllgut verlaufenden Rand einer Siegelnaht (10) zumindest im Bereich der Öffnungshilfe (14) wenigstens eine zur Siegelnaht (10) im Wesentlichen parallel verlaufende Schwächung der die Haftklebstoffschicht (4) aufweisenden Mehrschichtfolie in Form von in der Siegelschicht (2) durch Laserstrahleinwirkung erzeugten Mikroporen (5) aufweist.

## Beschreibung

Die Erfindung betrifft eine wiederverschließbare Verpackung, welche zwei Verpackungselemente umfasst, vorzugsweise eine Mulde und einen Deckel. Die Mulde dient der Aufnahme des Füllguts, vorzugsweise eines Lebensmittels, und ist in ihrem Randbereich mit einem Deckel über eine Siegelnaht so verbunden. Das erste Öffnungsverhalten der wiederverschließbaren Verpackung ist durch eine erfindungsgemäß speziell gestaltete Schwächung entscheidend verbessert.

Wiederverschließbare Verpackungen werden in zunehmendem Maße zur Verpackung von Gütern unterschiedlichster Art verwendet, um nach Entnahme eines Teils des Verpackungsguts ein Wiederverschließen und ein sachgerechtes Aufbewahren des nichtentnommenen Verpackungsguts zu gewährleisten.

Eine bevorzugte Wiederverschließbarkeit von Verpackungen wird unter anderem dadurch ermöglicht, dass das Verpackungsmaterial eines Verpackungselementes eine Mehrschichtfolie mit einer Schicht aus einem druckempfindlichen Klebstoff aufweist. Beim ersten Öffnen der Verpackung wird im Siegeinahtbereich ein Teil der versiegelten Siegelschicht von der angrenzenden Siegelschicht herausgetrennt, wodurch auch die selbstklebende Schicht im Siegelnahtbereich freigelegt und nach Entnahme eines Teils des Verpackungsgutes ein Wiederverschließen durch Andrücken des herausgetrennten Teils ermöglicht wird.

Der Mechanismus beruht darauf, dass die durch das Versiegeln der Siegelschichten der beiden Verpackungselemente im Siegelnahtbereich erhaltene Verschlussanordnung eine größere Verbundhaftung (Siegelnahtfestigkeit) zwischen den versiegelten Schichten aufweist als die Verbundhaftung zwischen der Haftklebstoffschicht und der unmittelbar an die Haftklebstoffschicht angrenzenden Siegelschicht und ggfs. die Kohäsion in der Haftklebstoffstoffschicht, wodurch im Siegelnahtbereich ein entsprechendes Stück der versiegelten Siegelschicht, ggfs. zusammen mit einer sich von dem Rest der Haftklebstoffschicht ablösenden Teilschicht des Haftklebstoffes, aus der Siegelschicht herausgerissen wird. Verpackungen dieser Art sind unter anderem in US 6,302,290 beschrieben.

Ein weiterer Wiederverschlussmechanismus beruht darauf, dass die Siegelnahtfestigkeit zwischen den versiegelten Schichten der verbundenen Verpackungselemente größer ist als die Verbundhaftung zwischen der an die Siegelschicht direkt oder indirekt angrenzenden Haftklebstoffschicht bzw. der an die Haftklebstoffschicht angrenzenden Trägerschicht. Diese Verbundhaftung kann ggf. auch kleiner als die Verbundhaftung zwischen Siegelschicht und Haftklebstoffschicht sein. Dadurch trennen sich die versiegelten Schichten zusammen mit zumindest einer Teilschicht oder ggfs. mit der kompletten Haftklebstoffschicht im Bereich der Siegelnaht von der Trägerschicht beim ersten Öffnen der Verpackung ab. Dadurch kann zum Wiederverschließen im Siegelnahtbereich das selbstklebende Teilstück der Haftklebstoffschicht verwendet werden.

Diese wiederverschließbaren Verpackungen haben jedoch den Nachteil, dass beim ersten Öffnen der Verpackung das Stück der Siegelschicht, das durch Versiegelung mit dem anderen Verpackungselement verbunden ist, sich zwar in dem Siegelnahtbereich von der Haftklebstoffschicht bzw. zusammen mit dem entsprechenden Haftklebstoffschichtstück von der Trägerschicht ablöst, aber nicht entsprechend diesen Bereich exakt aus der verbleibenden, nicht versiegelten Siegelschicht herausgetrennt wird. Diese Abtrennung erfordert einen hohen Kraftaufwand.

Es besteht daher ein Bedarf an wiederverschließbaren Verpackungen, die sich mit möglichst geringem Kraftaufwand leicht und exakt öffnen lassen.

Aufgabe der vorliegenden Erfindung war es daher, eine wiederverschließbare Verpackung mit einem verbesserten Öffnungsverhalten zur Verfügung zu stellen.

Diese Aufgabe wird durch eine wiederverschließbare erfindungsgemäße Verpackung gelöst, die aus zwei miteinander verbundenen Verpackungselementen X) und Y) besteht, wovon eines der beiden Verpackungselemente eine Mehrschichtfolie umfassend eine ggf. mehrlagige Siegelschicht a), eine eine Trägerschicht b) und eine dazwischenliegende Haftklebstoffschicht c) und das zweite Verpackungselement ein filmförmiges Kunststoffmaterial mit oder ohne Siegelschicht aufweist, und die beiden Verpackungselemente X, und Y, über ein Versiegeln der Siegelschicht(en) derart miteinander verbunden sind, dass die Siegelnahtfestigkeit (=Verbundhaftung) im Siegelnahtbereich größer ist als die Verbundhaftung zwischen der Haftklebstoffschicht c) und der ggf. mehrlagigen Siegelschicht a) bzw. diese Verbundhaftung auch größer ist als die Verbundhaftung zwischen der Haftklebstoffschicht c) und der an diese Schicht angrenzende Trägerschicht b) bzw. die Kohäsion der Haftklebstoffschicht kleiner ist als die Siegelnahtfestigkeit bzw. jede der genannten Verbundhaftungen, wodurch beim ersten Öffnen der Verpackung sich die versiegelte Siegelschicht a) im Siegelnahtbereich ggf. zusammen mit zumindest einer Teilschicht der Haftklebstoffschicht c) bzw. von deren verbleibenden Restschicht c) ablöst und von der angrenzenden Siegelschicht a) heraustrennt, der Haftklebstoff dort freigelegt und nach Entnahme eines Teils des Füllgutes ein Wiederverschließen der Verpackung durch Andrücken im Siegelnahtbereich ermöglicht wird, die dadurch gekennzeichnet ist, dass zumindest an dem näher zum verpackten Füllgut verlaufenden Rand der Siegelnaht zumindest im Bereich der Öffnungshilfe wenigstens eine vorzugsweise zur Siegelnaht im Wesentlichen parallel verlaufende Schwächung der die Haftklebstoffschicht c) aufweisenden Mehrschichtfolie in Form von in der Siegelschicht a) durch Laserstrahleinwirkung erzeugte Mikroporen vorhanden ist. Vorzugsweise grenzt die Schwächung an den inneren Rand der Siegelnaht an.

Erfindungsgemäß basiert entweder das Verpackungselement X) oder Y) auf einer Mehrschichtfolie umfassend
a) eine Siegelschicht als Oberflächenschicht, die ggf. mehrlagig sein kann,
b) eine Trägerschicht
c) eine innenliegende Haftklebstoffschicht, die zwischen der Siegelschicht und der Trägerschicht angeordnet ist,
d) gegebenenfalls eine Migrationsbarriereschicht, die zwischen der Siegelschicht und Haftklebstoffschicht angeordnet ist und vorzugsweise eine Lage der Siegelschicht a) sein kann, und
e) gegebenenfalls eine Gasbarriereschicht, vorzugsweise eine Sauerstoff- und/oder Wasserdampf-Barriereschicht.

Die Haftklebstoffschicht c) der Mehrschichtfolie basiert vorzugsweise auf einem druckempfindlichen Klebstoff, der gemäß der vorliegenden Offenbarung auch als Haftklebstoff bezeichnet wird.

Bevorzugt basiert die Haftklebstoffschicht c) auf wenigstens einem Polymeren ausgewählt aus der Gruppe umfassend Homopolymere und Copolymere von Acrylsäureestern, Homopolymere und Copolymere von Vinylethern, Copolymere aus Butadien und Styrol, bevorzugt Styrol-Butadien-Styrolcopolymere (SBS), Copolymere aus Styrol und Isopren, bevorzugt Styrol-Isopren-Styrol-Blockcopolymere (SIS), Copolymere aus Styrol, Butadien und Ethylen, bevorzugt Styrol-Ethylen-Butadien-Styrol-Blockcopolymere (SEBS), Polyvinylacetate, Polyurethane, Polychloroprene, Polyisobutylene, Polyisoprene, Butylkautschuck, Naturlatex und Mischungen der genannten Polymeren.

Diese Klebstoffe sind drucksensibel und insbesondere bei der Umgebungstemperatur fest. Aufgrund der Haftklebeeigenschaft dieser druckempfindlichen Klebstoffe, zu denen auch sogenannte "Hotmelts" gehören, ist es möglich, die erfindungsgemäße Verpackung nach dem ersten Öffnen durch Andrücken des der Siegelnaht entsprechenden aus der angrenzenden Siegelschicht abgetrennten Teilstücks der Siegelschicht, das ggfs. mit mindestens einer Teilschicht der Haftklebstoffschicht versehen ist, auf das andere Verpackungselement im Bereich der Siegelnaht wieder zu verschließen und das verbleibende Füllgut ohne Beeinträchtigung durch die Umgebung wie Austrocknen, Aromaverlust und/oder ,Feuchtigkeitsaufnahme weiter zu lagern.

Die Dicke der Haftklebstoffschicht beträgt vorzugsweise 2-30 µm, besonders bevorzugt bis zu 20 µm.

Der Haftklebstoff kann in Form einer Lösung in wenigstens einem organischen Lösungsmittel bevorzugt in wenigstens einem Lösungsmittel ausgewählt aus der Gruppe umfassend Ethylacetat, Methylethylketon, Hexan, Heptan und Petrolether, aus wässriger Dispersion oder auch einer Schmelze auf das jeweilige Substrat aufgetragen werden. Lösungsmittelfreie, reaktive Systeme, insbesondere druckempfindliche Klebstoffe basierend auf Polyurethanen oder Polyacrylaten werden gegebenenfalls zur (Nach)-Härtung mit UV-oder Elektronenstrahlen bestahlt.

Die Haftklebstoffschicht kann aber auch zusammen mit der weiteren Schichtenfolge der zum Einsatz kommenden Mehrschichtfolie unter Einsatz in einem Coextrusionsverfahren extrudiert werden (sogenannten extrudierbaren Hotmelt-Klebstoffen). Aus produktionstechnischen Gründen kann es bei dieser Verfahrensweise gegebenenfalls notwendig sein, unmittelbar anschließend an die Klebstoffschicht auch eine Schicht aus einem extrudierbaren olefinischenHomo-und/oder Copolymeren zu coextrudieren.

Die Schicht aus Haftklebstoff c) kann gegebenenfalls Weichmacher, Füllstoffe, Konservierungsmittel, Antioxidantien, Stabilisatoren und/oder Farbstoffe aufweisen. Die zum Einsatz kommenden Haftklebstoffe zeichnen sich durch einen weitgehend neutralen Geruch aus.

Die Siegelschicht a) basiert vorzugsweise auf wenigstens einem Polymeren ausgewählt aus der Gruppe umfassend Polyolefine, Olefincopolymere, Polyester oder Copolyester.

Vorzugsweise basiert die Siegelschicht a) auf wenigstens einem Polymeren ausgewählt aus der Gruppe umfassend Polyethylene, vorzugsweise Polyethylene hoher Dichte (HDPE), Polyethylene niedriger Dichte (LDPE) und lineare Polyethylene niedriger Dichte (LLDPE), Copolyester, Polyester, Ethylen/Propylen-Copolymerisate, Ethylen/Vinylacetat-Copolymerisate, Copolymerisate aus Ethylen und Estern der Acrylsäure oder Methacrylsäure, Copolymerisate aus Ethylen- und Acrylsäure oder Methacrylsäure sowie deren Salze, bevorzugt Natrium- oder Magnesium-Salze, und Styrol-Copolymerisate.

Weiterhin kann es vorteilhaft sein, die Siegelschicht mehrlagig zu gestalten, d. h. die jeweilige Siegelschicht aus mindestens zwei Lagen der genannten Polymeren, die vorzugsweise derselben Art Polymeren angehören, aufzubauen. Bevorzugt weisen diese Polymere unterschiedliche physikalische Eigenschaften auf.

Die Mehrlagigkeit der Siegelschicht a) kann auch darin bestehen, dass sie eine Lage mit Barrierewirkung, vorzugsweise Migrationsbarrierewirkung umfasst.

Vorzugsweise kann die Mehrlagigkeit der Siegelschicht a) auch darin bestehen, das an die Siegelschicht a) eine Schichtfolge bestehend aus ggf. einer Haftvermittlerschicht f), wenigstens einer Barriereschicht d), ggf. einer weiteren Haftvermittlerschicht f), ggf. wenigstens einer Schicht aus olefinischen Homo- und/oder Copolymeren g) angeordnet ist, die in unmittelbaren Kontakt mit der Schicht aus Haftklebstoff c) steht.Zwischen der Schicht aus Haftklebstoff c) und der Trägerschicht b) kann eine weitere Schicht aus olefinischen Homo- und/oder Copolymeren h) angeordnet sein. Die Haftvermittlerschichten basieren vorzugsweise jeweils auf einer Mischung aus Polyolefinen mit aufgepfropften Maleinsäureanhydrideinheiten und/oder Olefin-Copolymerisaten mit aufgepropften Maleinsäureanhydrideinheiten.

Die Barriereschicht d) hat vorzugsweise eine Migrationsbarrierewirkung. Die Migrationsbarriereschicht verhindert vorzugsweise eine Migration insbesondere von niedermolekularen Bestandteilen aus dem Verpackungsmaterial, insbesondere aus der Haftklebstoffschicht c) in den Innenraum der Verpackung. Auf diesem Weg lässt sich vorteilhafterweise eine unerwünschte Migration in das Füllgut sowie eine unangenehme Geruchsbildung in der Verpackung vermeiden. Die Migrationsbarriereschicht kann zusätzlich als Sauerstoff- und/oder Wasserdampfbarriereschicht dienen.

Die Migrationsbarriereschicht d) basiert vorzugsweise auf wenigstens einem thermoplastischen Polymer wie einem Ethylen-Vinylalkohol-Copolymerisat, ggf. gemischt mit Polyvinylalkohol. Polyvinylidenchloride, Polyester, Polyamide, Copolyamide, Ethylen-Vinylalkohol Copolymerisate und/oder Vinylidenchlorid-Copolymerisate sowie auf die Trägerschicht aufgedampftes AlₓO_{y} oder (SiO)ₓ können als Material für die Gasbarriereschicht e) verwendet werden.

In einer bevorzugten Ausführung weist das Polyamid und/oder das Copolyamid der Gasbarriereschicht anorganische Füllstoffe auf. Diese Füllstoffe sind bevorzugt Phyllosilikate, Oxide, Oxihydrate und/oder -carbonate, besonders bevorzugt Montmorillonite und/oder Glimmer. Zumindest ein Teil der Füllstoffe kann vorzugsweise nanoskalig sein. Der Anteil der nanoskaligen anorganischen Füllstoffe beträgt vorzugsweise 10 - 3000 ppm, besonders bevorzugt 50 - 2000 ppm, bezogen auf das Gesamtgewicht der Gasbarriereschicht e).

Die Dicke einer ggf. vorhandenen Gasbarriereschicht e) beträgt vorzugsweise 0,5 bis 20 µm, bevorzugt 1 bis 10 µm.

Die Dicke einer vorzugsweise vorhandenen Migrationsbarriereschicht d) beträgt vorzugsweise 0,5 bis 10 µm, mehr bevorzugt < 5 µm, besonders bevorzugt < 2 µm. Sofern zwischen der Migrationsbarriereschicht d) und der Schicht aus Haftklebstoff c) und/oder zwischen der Schicht aus Haftklebstoff c) und der Trägerschicht b) ggf. aus produktionstechnischen Gründen auch eine Schicht g) und/oder eine Schicht h) aus mindestens einem olefinischen Homo- oder Copolymeren angeordnet ist, basiert diese bevorzugt auf einem Polyethylen, einem Ethylen-Copolymerisat, bevorzugt einem Ethylen-Vinylacetat-Copolymerisat oder auf einer Mischung der genannten Polymeren. Bevorzugt bestehen diese Schichten g) und h) aus LDPE, HDPE, LLDPE oder m-PE (metallocen Polyethylen) oder einer Mischung aus mindestens zwei der genannten Polyethylene oder mindestens einem genannten Polymeren mit einem Ethylen/Vinylacetat-Copolymerisat, ganz besonders bevorzugt aus LDPE, Ethylen/Vinylacetat-Copolymerisat oder deren Mischung.

Die Schicht aus Haftklebstoff c) kann in unmittelbarem Kontakt mit der Siegelschicht a) vorliegen oder bei einer mehrlagigen Siegelschicht a) umfassend vorzugsweise zumindest die Schicht d) bzw. die weiteren Schichten f), f') und d) bzw. d) und g) oder e) einen indirekten Kontakt haben.

An die Schicht aus Haftklebstoff c) schließt eine vorzugsweise die Außenseite der Verpackung bildende Trägerschicht b) an, die ggf. mehrlagig sein kann und auf einem thermoplastischen Polymerisat ggf. kombiniert mit wenigstens einem Material ausgewählt aus der Gruppe umfassend, Metalle, Papier, Pappe, Karton und Glas basiert.

Bevorzugt umfasst die Trägerschicht b) ein thermoplastisches Polymerisat ausgewählt aus der Gruppe umfassend Polyolefine, Olefin-Copolymerisate, Polyester, Copolyester, Polystyrole, Polyurethane, Polycarbonate, Polyvinylidenchloride und Polyamide. Sofern ein Metall mitverwendet wird, wird es vorzugsweise ausgewählt aus der Gruppe umfassend Aluminium und Weißblech.

Die Dicke der ggf. mehrlagigen Trägerschicht b) kann in einem weiten Bereich variieren und hängt u. a. davon ab, welchen mechanischen Belastungen die Verpackung im Gebrauch unterworfen ist, ohne dass dabei die ggf. notwendige Thermoverformbarkeit der erfindungsgemäß zum Einsatz kommenden Mehrschichtfolie erkennbar beeinträchtigt wird. Bevorzugt beträgt die Dicke der Trägerschicht b) 25 bis 5000 µm, besonders bevorzugt 50 µm bis 1000 µm, ganz besonders bevorzugt mindestens 50 µm bis 500 µm. Sofern die vorstehend beschriebene Mehrschichtfolie als Deckel verwendet wird, beträgt die Dicke vorzugsweise 30 bis 100 µm.

Besonders bevorzugt ist die Trägerschicht biaxial orientiert insbesondere bei der als Deckel verwendeten Mehrschichtfolie.

Das zweite Verpackungselement der erfindungsgemäßen wiederverschließbaren Verpackung besteht auch aus einer vorzugsweise siegelbaren Mehrschichtfolie, die
a') eine Siegelschicht als Außenschicht,
b') eine Trägerschicht und
c') gegebenenfalls eine Gasbarriereschicht, die zwischen der Siegelschicht a') und der Trägerschicht b') angeordnet, aufweist.

Als siegelbare Materialien für die Siegelschicht a') werden vorzugsweise die thermoplastischen Polymeren eingesetzt, die bereits vorstehend für den Aufbau der Siegelschicht a) aufgeführt wurden. Darüber hinaus entspricht die Dicke der Siegelschicht a') den Dickenangaben, die im Zusammenhang mit der Definition der Siegelschicht a) bereits vorstehend aufgeführt wurden. Die Siegelschicht a') kann auch mehrlagig aufgebaut sein, wobei vorzugsweise für die Herstellung dieser Lagen dieselbe Art Polymeren mit unterschiedlichen physikalischen Eigenschaften zum Einsatz kommen.

Die Trägerschicht b') basiert vorzugsweise auf einem thermoplastischen Polymerisat, das gegebenenfalls mit Metall, Papier, Pappe, Karton oder Glas verbunden sein kann. Besonders bevorzugt wird als Trägerschichtmaterial ein thermoplastisches Polymerisat eingesetzt. Die vorstehend aufgeführten thermoplastischen Materialien aus denen die Trägerschicht b) hergestellt werden kann, eignen sich auch für die Herstellung der Trägerschicht b').

Sofern zwischen der Siegelschicht a') und der Trägerschicht b') eine Gasbarriereschicht c') angeordnet ist, wird diese vorzugsweise aus den thermoplastischen Polymeren gebildet, die vorstehend für die Gasbarriereschicht e) aufgeführt wurden. Vorzugsweise hat die Schicht c') eine Sauerstoff- und/oder Wasserdampfbarriere Wirkung.

Sofern beide Verpackungselemente X) und Y) eine Siegelschicht aufweisen, sind die Siegelschichtmaterialien vorzugsweise aus derselben Art von Polymeren hergestellt.

Sofern das zweite Verpackungselement aus einem filmförmigen Kunststoffmaterial ohne Siegelschicht a') hergestellt wurde, ist darauf zu achten, dass die Erweichungstemperatur der Siegelschicht a) der Mehrschichtfolie enthaltend die Haftklebstoffschicht c) um wenigstens 5 °C, bevorzugt um wenigstens 10 °C, besonders bevorzugt um wenigstens 15 °C, am bevorzugtesten um wenigstens 20 C niedriger ist als die Erweichungstemperatur des filmförmigen Kunststoffmaterials des zweiten Verpackungselements.

Darüber hinaus ist zu beachten, dass die Trägerschicht b') des filmförmigen Kunststoffmaterials des zweiten Verpackungselements so beschaffen ist, dass sie bei Temperaturen des Siegelprozesses nicht schmilzt.

Die Erweichungstemperatur der Siegelschicht a) sollte daher im Allgemeinen 80 °C bis 180 °C, bevorzugt 100 °C bis 170 °C betragen. Die Dicke der ggf. mehrlagigen Siegelschicht a) beträgt 5 bis 80 µm, bevorzugt 10 bis 60 µm, ganz besonders bevorzugt 10 bis 30 µm.

Die Wandstärke des Verpackungselements aus einem filmförmigen Material ohne Siegelschicht kann in einem weiten Bereich variieren. Sie hängt davon ab, welchen mechanischen Belastungen die Verpackung ggf. beim Gebrauch und bei der Lagerung unterworfen ist. Bevorzugt beträgt die Wandstärke dieses Verpackungselement 50 bis 5000 µm, besonders bevorzugt 100 bis 1000 µm, ganz besonders bevorzugt 100 bis 500 µm.

In einer entsprechenden bevorzugten Ausführung der vorliegenden Erfindung basiert die Siegelschicht a) des Verpackungselements X) auf einem Copolyester und das filmförmige Kunststoffmaterial des Verpackungselements Y) auf einem amorphen oder kristallinen Polyethylenterephthalat.

In einer weiteren bevorzugten Ausführung basiert die Siegelschicht a) des Verpackungselements X) auf einem Polyolefin wie Ethylen-Propylen-Copolymerisat und das filmförmige Kunststoffmaterial des Verpackungselements Y) auf einem Polyolefin wie Polypropylen.

Ebenfalls bevorzugt ist eine Kombination, gemäß der die Siegelschicht a) des Verpackungselements X) auf einem Copolyester oder Ethylen-Vinylacetat-Copolymerisat basiert und das Verpackungselement Y) aus Polyvinylchlorid oder Polyvinylidenchlorid besteht oder die Siegelschicht a) des Verpackungselements X) auf einem Copolyester und das Verpackungselement Y) auf einem Polycarbonat basiert.

Weiterhin bevorzugt ist eine Ausführung der erfindungsgemäßen Verpackungen, gemäß der die Siegelschicht a) des Verpackungselements X) auf einem Copolymerisat aus Ethylen und Acrylsäure oder Methacrylsäure sowie deren Salze basiert und das Verpackungselement Y) aus Polystyrol ist.

Unabhängig davon, ob beide Verpackungselemente X) und Y) eine Siegelschicht aufweisen oder nicht, ist auf folgendes zu beachten:
Durch Einstellung der Siegelparameter wie des Siegeldrucks und der Siegeltemperatur und Abstimmung der zu versigelnden Materialien gelingt es, dass die Siegelfestigkeit zwischen der Siegelschicht a) und der Siegelschicht a') bzw. dem Kunststoffmaterial ohne Siegelschicht im Siegelbereich größer ist als die Verbundhaftung zwischen der Schicht aus Haftklebstoff c) und der jeweils daran angrenzenden Schicht bzw. Schichtfolge. Die notwendigen Siegelbedingungen sind im Allgemeinen durch einfache Vorversuche feststellbar. Damit wird bewirkt, dass beim ersten Öffnen der Verpackung im Siegelnahtbereich der Haftklebstoff freigegeben wird und dort die Verpackung wieder verschlossen werden kann. Besonders einfach gelingt dies, wenn die Siegelnahtfestigkeit (gemessen gemäß den Angaben in der vorliegenden Anmeldung in N/15 mm) wenigstens um 1,5 vorzugsweise um wenigstens 2 größer ist als die vorstehend erwähnte, jeweils relevante(n) Verbundhaftung(en) gemessen in Anlehnung an die Testmethode FINAT Nr. 2 in N/15 mm.

So gelingt es beim ersten Öffnen der Verpackung, dass das im Bereich der Siegelnaht befindliche versiegelte Teilstück der Siegelschicht a) durch Abtrennen von der angrenzenden Siegelschicht und Ablösen von der Haftklebstoffschicht c) auf dem anderen Verpackungselement verbleibt, wodurch die Schicht aus Haftklebstoff c) im Bereich der Siegelnaht freigegeben wird.

Die Mehrschichtfolien der Verpackungselemente X) und Y) können jeweils bedruckt und/oder eingefärbt sein.

Zur Herstellung der erfindungsgemäßen Verpackungen können die Mehrschichtfolien bzw. das filmförmige Kunststoffmaterial für die Verpackungselemente X) und Y) nach unterschiedlichen Fertigungsprozessen hergestellt werden. Hierzu können alle bekannten Herstellungsverfahren eingesetzt werden, vorzugsweise Extrusionsprozesse.

Aus den Verpackungsmaterialien können die erfindungsgemäßen wiederverschließbaren Verpackungen hergestellt werden, indem zur Herstellung eines Verpackungselementes eine Mehrschichtfolie enthaltend die Haftklebstoffschicht c) in Form einer fortlaufenden Folienbahn eingesetzt wird, die wenigstens eine Schwächung in Form von mit Hilfe von Laserstrahlen in die Siegelschicht eingebrachten, vorzugsweise aneinander gereihten Mikroporen im Bereich der Öffnungshilfe und am Innenrand der beim Verschließen der Verpackung anzubringenden Siegelnaht im nicht verformten Randbereich aufweist. Aus dieser Mehrschichtfolie werden durch Thermoformung, vorzugsweise durch Tiefziehen, bleibend verformte Verpackungsbehälter, vorzugsweise Verpackungsmulde, hergestellt und nach dem Befüllen mit dem Füllgut mit einer siegelbaren Mehrschichtfolie ohne Haftklebstoffschicht c) oder mit einem keine

Siegelschicht aufweisenden filmförmigen Kunststoffmaterial als Deckel durch Versiegeln verschlossen und anschließend vereinzelt wird.

Es ist auch möglich, dass als Mehrschichtfolie enthaltend einer Haftklebstoffschicht c) eine Mehrschichtfolie in Form einer fortlaufenden Folienbahn eingesetzt wird, die bereits wenigstens eine Schwächung in Form von mit Hilfe von Laserstrahlen in die Siegelschicht eingebrachten, vorzugsweise aneinander gereihten Mikroporen zumindest teilweise im späteren Bereich der Öffnungshilfe und am Innenrand der späteren Siegelnaht ausweist. Aus einer solchen vormarkierten Mehrschichtfolie können Verschlussdeckel hergestellt werden, die nach dem Befüllen des Verpackungsbehälters, vorzugsweise der Verpackungsmulde, mit dem Füllgut durch Versiegeln mit dem gefüllten Verpackungsbehälter, vorzugsweise der gefüllten Verpackungsmulde, jeweils verbunden werden.

Ebenso können die erfindungsgemäßen wiederverschließbaren Verpackungen hergestellt werden, indem aus der bahnförmigen, eine Haftklebstoffschicht c) aufweisenden Mehrschichtfolie durch Thermoformung, vorzugsweise durch Tiefziehen, Verpackungsmulden hergestellt werden, die in line mit Hilfe des Lasers in ihrem Rand zumindest teilweise im Bereich der später mit dem Deckel angebrachte Öffnungshilfe wenigstens eine Schwächung in Form von in die Siegelschicht a) eingebrachten, vorzugsweise aneinander gereihten Mikroporen erhalten haben und nach dem Befüllen mit dem Füllgut, in der Siegelstation mit einer bahnförmigen, keine Haftklebstoffschicht c) aufweisenden, siegelbaren Mehrschichtfolie oder dem filmförmigen, keine Siegelschicht aufweisenden Kunststoffmaterial als Deckel durch Versiegeln verschlossen werden. Die Schwächung wird dabei so angeordnet, dass sie später am Innenrand der zum Verschließen der Verpackung angebrachten Siegelnaht liegt.

Zur Herstellung der erfindungsgemäßen Verpackungen kann auch so vorgegangen werden, dass in line die aus einer bahnförmigen, siegelbaren Mehrschichtfolie, die keine Haftklebstoffschicht c) enthält, oder dem filmförmigen, keine Siegelschicht aufweisenden, bahnförmigen Kunststoffmaterial durch Thermoformung, vorzugsweise durch Tiefziehen, Verpackungsbehälter, vorzugsweise Verpackungsmulden hergestellt werden. Diese werden nach ihrer Befüllung in der Siegelstation mit einer eine Haftklebstoffschicht c) aufweisenden Mehrschichtfolie als Deckel durch Versiegeln verschlossen, wobei diese Mehrschichtfolie bereits vor dem Erreichen der Siegelstation mit Hilfe von Laserstrahlen eine Schwächung in Form von aneinandergereihten, in die Siegelschicht a) eingebrachte Mikroporen erhalten hat, die dann zumindest teilweise im Bereich der Öffnungshilfe und am inneren Rand der anschließend zum Verschließen der Verpackung angebrachten Siegelnaht vorliegen.

Es ist auch möglich, zur Herstellung der erfindungsgemäßen Verpackungen separat produzierte Verpackungsmulden, d.h. vorgefertigte Verpackungsmulden in den genannten Herstellungsverfahren einzusetzen.

Bei den aufgeführten Verfahren zur Herstellung der erfindungsgemäßen Verpackungen sind die vorstehend aufgeführten Verfahrensbedingungen zu beachten.

Die entsprechend den vorstehend aufgeführten erfindungsgemäßen Verfahren hergestellte, wiederverschließbare Verpackungen weisen zur Verbesserung ihres Öffnungsverhaltens, zumindest im Bereich der Öffnungshilfe mindestens eine vorzugsweise unmittelbar an den Innenrand der Siegelnaht anschließende Schwächung des Verpackungsmaterials auf, das die Haftklebstoffschicht c) aufweist. Diese Schwächung ist vorzugsweise eine Linie in Form von vorzugsweise aneinander gereihten, ggfs. überlappenden Mikroporen, die in der Siegelschicht a) mit Hilfe eines Lasers erzeugt worden sind.

Dazu wird, wie bereits ausgeführt bevorzugt, die Mehrschichtfolie mit der Haftklebschicht c) bereits während ihrer Produktion von der Seite, auf welche die äußere Siegelschicht a) der Mehrschichtfolie angeordnet ist, zur Erzeugung der Schwächungslinie mit einem Laserstrahl behandelt. Es ist aber auch möglich, diese Mehrschichtfolie als Deckelfolie oder bereits verformt zu Verpackungsbehältern, vorzugsweise zu Verpackungsmulden, in line zur Laserbestrahlung taktgenau auszusetzen.

Als Laser kommen verschiedene Lasertypen in Betracht. Im UV-Bereich kann der Excimer-Laser bei Wellenlängen von 196, 248, 308 und 351 nm eingesetzt werden. Weiterhin findet sich im sichtbaren und nahen IR-Bereich der Neodyn: YAG-Laser Anwendung. Dieser besitzt eine Wellenlänge von 532 bzw. 1064 nm. Als weiter Laser, der im IR-Bereich emittiert, ist der CO₂-Laser zu nennen. Dieser Laser emittiert im fernen IR-Bereich z.B. bei Wellenlängen von 10,6 µm gepulst bzw. 9300 nm. Darüber hinaus existiert auch der Diodenlaser mit verschiedenen Wellenlängen von 800 bis 1000 nm. Entscheidend für die Wirkung der Laserstrahlung ist, dass der Laserstrahl bis zu einer Schicht durchdringt, die vorzugsweise mit einem Material ausgerüstet ist, dass ein Absorptionsmaximum für die Wellenlänge des zum Einsatz kommenden Laserstrahls aufweist, wodurch die Energie des Laserstrahls in Wärme umgewandelt und das Kunststoffmaterial im Umfeld carbonisiert wird. Gegebenenfalls entstehen auch gasförmige Nebenprodukte, die nach außen entweichen und abgesaugt werden können.

Entsprechend kann daher die Tiefe der Mikroporen, die die Schwächung der Mehrschichtfolie mit einer Haftklebstoffschicht (c) zur Erzielung eines besseren Öffnungsverhaltens beim ersten Öffnen der wiederverschließbaren Verpackung erreichen sollen, gezielt gesteuert werden. Die Schicht der Mehrschichtfolie, bis zu der die Tiefe der Mikroporen reichen soll, ist daher so zu dotieren, dass sie gegenüber den Schichten, durch die der Laserstrahl durchgehen muss, ein Absorptionsmaximum für die Wellenlänge des Laserstrahls aufweist. Vorzugsweise sind daher die Schichten, die von dem Laserstrahl zu durchdringen sind, transparent. Durch einfache Vorversuche kann festgestellt werden, ob die Polymeren, aus denen die zu durchdringenden Schichten aufgebaut sind, für den Laserstrahl genügend durchlässig sind, damit dieser auf die Schicht mit dem vorstehend erläuterten Absorptionsmaximum für die Laserstrahlwellenlänge möglichst unbeeinflusst treffen kann. Vorzugsweise wird der Laserstrahl auf die siegelbare Oberfläche der Mehrschichtfolie gerichtet.

Neben einer üblicherweise nur begrenzt möglichen Auswahl der Polymermaterialien, aus denen die einzelnen Schichten der zum Einsatz kommenden Mehrschichtfolie mit Haftklebstoff aufgebaut werden können, kann die Eindringtiefe bevorzugt mit Hilfe einer Dotierung mit Laserpigmenten, die ein Absorptionsmaximum für die jeweilige Wellenlänge des zum Einsatz kommenden Laserstrahls aufweisen, gesteuert werden.

Als Laserpigmente werden daher insbesondere solche Zusatzstoffe bezeichnet, die Laserstrahlen innerhalb eines Wellenbereiches von 150 bis 11000 nm absorbieren können.

Geeignete Laserpigmente sind vorzugsweise Silikate insbesondere Schichtsilikate wie Glimmer, vorzugsweise Muscovit, Biotit, Phlogopit, Vermicullit sowie synthetischer Glimmer. Darüber hinaus kann Siliziumdioxid in kristalliner oder amorpher Form, sowie anorganische Zusatzstoffe ausgewählt aus der Gruppe Feldspat, calcinierter Kaolin, Kaolin, Nephelinsyenid, Talkum, Calciumsilicahydrat, Kieselsäure, pyrogene oder gefällte Kieselsäure, Cristobalit, Diatomeenerde, Kieselgur, Mikro-Glaskugeln oder Gemische der genannten Verbindungen eingesetzt werden.

Die genannten Silikate können darüber hinaus vorzugsweise eine Beschichtung aus oder einen Zusatz von Metalloxiden aufweisen. Als Metalloxide eignen sich SbO, SnO und/oder TiO2.

Die Laserpigmente haben vorzugsweise eine Teilchengröße von 0,01 bis 100 µm, besonders bevorzugt von 0,5 bis 20 µm, wobei eine maximale Teilchengröße von 25 µm nicht überschritten werden sollte, sofern nicht für die Teilchen auf Grund ihrer Größenverhältnisse (Dicke zu Länge) nur eine schichtförmige Anordnung in Frage kommt.

Um eine ausreichende Laserstrahlabsorption zu erreichen, sollte die zur Absorption vorgesehene Schicht der erfindungsgemäß zum Einsatz kommenden Mehrschichtfolie das oder die Laserpigmente vorzugsweise in einer Menge von 0,1 bis 5 Gew %, besonders bevorzugt 0,3 bis 3 Gew %, ganz besonders bevorzugt 0,5 bis 1 Gew %, bezogen auf das Gewicht der mit dem Laserpigmenten ausgerüsteten Schicht, aufweisen.

Die Einarbeitung der Laserpigmente in die entsprechend ausgerüstete Schicht der Mehrschichtfolie kann über ein Masterbatch, basierend auf dem Polymeren, aus dem die auszurüstende Schicht aufgebaut ist, erfolgen. Die genannten Laserpigmente eignen sich Insbesondere für die Absorption der Strahlung eines Neodyn: YAG-Laser bzw. eines CO₂-Lasers.

Die Laserpigmente sind käuflich erwerbbare Produkte und werden z.B. unter dem Namen Lazerflair^{®} bzw. Iriodin^{®}vertrieben.

Bei der erfindungsgemäß zum Einsatz kommenden Mehrschichtfolie mit einer Haftklebstoffschicht (c) wird daher bevorzugt die Eindringtiefe d.h. die Tiefe der Mikroporen durch Dotierung der Siegelschicht (a) bzw. der ggfs. zwischen der Siegelschicht (a) und der Haftklebstoffschicht (c) angeordneten Zwischenschichten mit Laserpigmenten so gesteuert, dass die Absorption der Wellenlänge der zur Anwendung kommenden Laserstrahlung in der dotierten Schicht ein Absorptionsmaximum gegenüber der vorzugsweise vorhandenen Migrations- und/oder Gasbarriereschicht bzw. der Haftklebstoffschicht - sofern keine Migrationsbarriereschicht vorhanden ist - und/oder der Trägerschicht hat.

Sofern die Siegelschicht und die Trägerschicht ein Absorptionsmaximum für den zum Einsatz kommenden Laserstrahl besitzen, kann die Eindringtiefe durch die Energie bzw. Einwirkungsdauer des Laserstrahls bestimmt werden.

Dementsprechend können die Mikroporen vorzugsweise bis an die Haftklebstoffschicht (c) heranreichen. Dabei können sie ggf. - sofern eine Migrations- und/oder Gasbarriereschicht vorhanden ist - sogar durch diese hindurchreichen, sofern dadurch nicht die Globalmigration aus dem Verpackungsmaterial insbesondere in das Füllgut nicht oder nur vernachlässigbar verändert wird.

Vorzugsweise verläuft die mit Hilfe von Laserstrahlung erzeugte Schwächungslinie an dem näher zum verpackten Füllgut verlaufenden Rand der Siegelnaht, vorzugsweise nur in Teilbereichen der vorzugsweise auf dem Rand des Verpackungsbehälters umlaufenden Siegelnaht, ganz besonders bevorzugt im Bereich der Öffnungshilfe, vorzugsweise einer Öffnungslasche.

Erfindungsgemäß ist es auch möglich, mehrere Schwächungslinien nebeneinander ausgehend von dem Inneren zum Füllgut näheren verlaufenden Rand der Siegelnaht und im wesentlichen parallel zur Siegelnaht, besonders bevorzugt nur im Bereich der Öffnungshilfe anzubringen.

Vorzugsweise sind die Mikroporen in einer geraden Linie am inneren Rand und parallel zur Siegelnaht, vorzugsweise nur im Bereich der Öffnungshilfe angebracht. Die Schwächungslinie kann aber einen von einer geraden Linie abweichenden Verlauf haben, wie z.B. eine gewellte Linie oder eine im Zick-Zack verlaufende Linie.

Bevorzugt weisen die Mikroporen der Schwächungslinie eine gleichmäßige, räumliche Ausdehnung auf. Sie können überlappend, d.h. eine Mikropore geht in die andere über, sich berührend oder in regelmäßigen Abständen voneinander in der Schwächungslinie vorliegen. Sofern die Poren in einem Abstand voneinander angebracht sind, sollte der Abstand zwischen zwei benachbarten Poren bestimmt zwischen deren jeweiligen nächstliegenden Rand bevorzugt höchstens 50% des Durchmessers einer Mikropore betragen. Bevorzugt weisen die Mikroporen einen kreisrunden oder ovalen Durchmesser auf. Der längste Durchmesser eine Pore liegt vorzugsweise im Bereich von 100 bis 400 µm.

Gegenüber nur durch mechanische Einwirkung angebrachten Schwächungen zur Verbesserung des Öffnungsverhaltens einer Verpackung, wie z. B. Verformungen zur Erzeugung von Einkerbungen in einem Schichtverbund im Bereich einer Öffnungshilfe, haben die erfindungsgemäß ausgerüsteten Verpackungen den großen Vorteil, dass deren Öffnungsverhalten nicht nur dem Bedarf entsprechend eingestellt werden kann, sondern auch für eine beliebige Anzahl derselben Art von Verpackungen praktisch ohne Schwankungen und Abweichungen, d. h. reproduzierbar ist.

**Figur 1** zeigt eine schematische, perspektivische Darstellung der Schwächungslinie einer Mehrschichtfolie mit einer Haftklebstoffschicht, die erfindungsgemäß als Verpackungsmaterial eingesetzt wird, wobei die Poren überdimensional dargestellt sind.

**Figur 2** zeigt einen Querschnitt durch eine erfindungsgemäße, wiederverschließbare Verschlussanordnung mit einer Schwächungslinie in Form von Mikroporen.

**Figur 3** zeigt den Querschnitt einer geöffneten erfindungsgemäßen Verschlussanordnung.

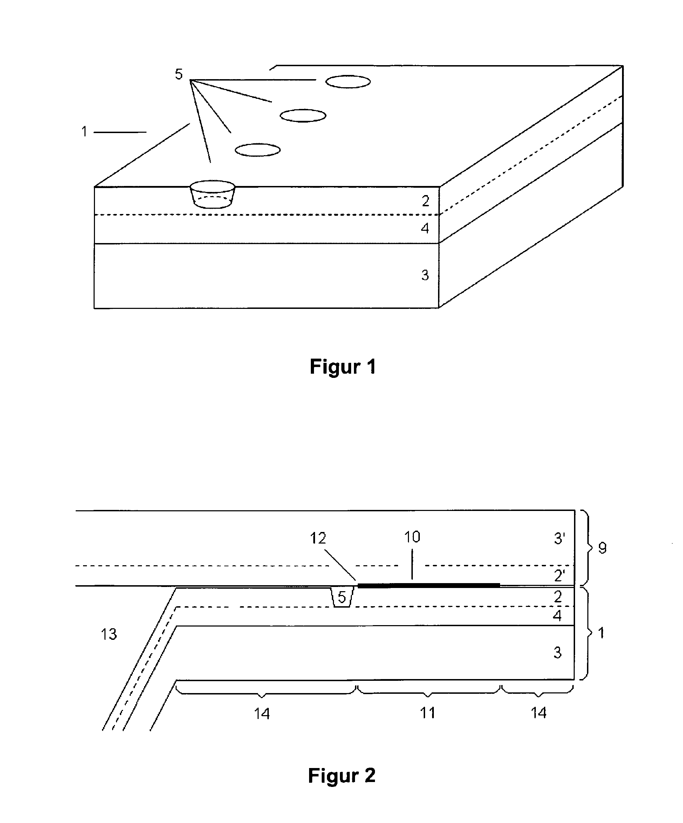

Figur 1 zeigt insbesondere eine schematische Darstellung einer Mehrschichtfolie (1) im Querschnitt der Seitenansicht, die als Verpackungsmaterial für die erfindungsgemäße Verpackung eingesetzt wird. An die Siegelschicht a) (2), dotiert mit einem Laserpigment grenzt die Haftklebstoffschicht c) (4) an. Die Haftklebstoffschicht c) (4) ist mit der Trägerschicht b) (3) verbunden. Die Mikroporen (5) zur Schwächung der Mehrschichtfolie erstrecken sich vorzugsweise in die Siegelschicht (2), vorzugsweise bis zu 95% der Schichtdicke.

In Figur 2 wird eine schematische Darstellung einer bevorzugten Ausführungsform der erfindungsgemäßen Verschlussanordnung mit verbessertem Öffnungsverhalten dargestellt. Die Siegelschicht (2) des Verpackungselementes (1), das als Mulde ausgeformt ist, ist der Siegelschicht (2') des zweiten Verpackungselement (9) als Deckel zugewandt. Der Deckel weist im Bereich (14) eine Öffnungshilfe in Form einer Lasche auf. Die Verpackungselemente (1) und (9) sind über eine Siegelnaht (10) durch Versiegelung der Siegelschicht a) (2) mit der Siegelschicht a') ( 2') miteinander so verbunden, dass im Bereich (11) der Siegelnaht (10) die Verbundhaftung (Siegelnahtfestigkeit) zwischen den Siegelschichten (2) und (2') größer ist als die Verbundhaftung zwischen der Trägerschicht b) (3) und der Siegelschicht a) (2). Die Schwächungslinie, die in Form von Mikroporen (5) am Rand (12) der Siegelnaht (10) angeordnet ist, ermöglicht es, dass das erste Öffnen der Verpackung erleichtert wird.

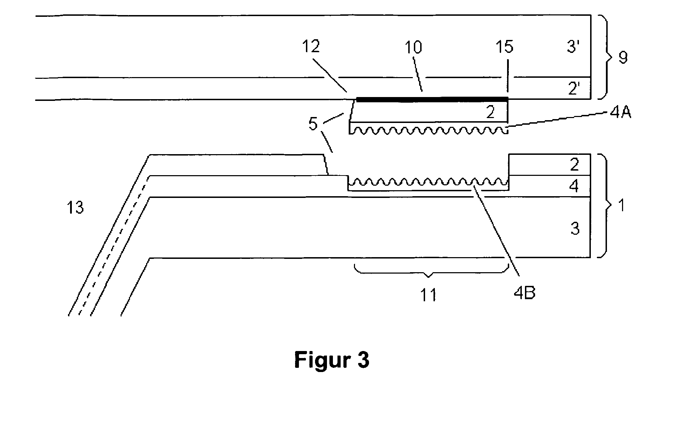

Figur 3 zeigt die erfindungsgemäße Verschlussvorrichtung gemäß Fig. 2 nach dem ersten Öffnen, wobei ein Teilschichtstück der Siegelschicht a) (2) im Siegelnahtbereich (11) zusammen mit einem Teilschichtstück (4A) der Haftklebstoffschicht c) (4) durch das Öffnen der Verpackung von dem Teilschichtstück (4B) der Haftklebstoffschicht c) (4) abgelöst wurde und dieses Teilschichtstück nicht nur am äußeren Rand (15) der Siegelnaht (10), sondern auch am inneren Rand (12), der dem Füllgut zugewandt ist, sich exakt von der Siegelschicht (2) abgetrennt hat. Dieses exakte Abtrennen aus der Siegelschicht, wodurch das selbstklebende Teilschichtstück (4B) der Haftklebstoffschicht (4) freigelegt wird, wird durch die Schwächungslinie in Form der Mikroporen (5) so günstig beeinflusst, dass das Öffnen mit geringem Kraftaufwand möglich ist.

Die erfindungsgemäßen Verpackungen eignen sich bevorzugt zur Verpackung von Lebensmitteln, wie Käse, Wurst, Schinken, Kuchen, Süßigkeiten, Fleischwaren, Soßen, Getränken, Joghurt, Gewürzen, Reis, Hülsenfrüchten, Obst usw., die insbesondere vorzugsweise zum mehrmaligen Verbrauch bzw. Verzehr vorgesehen sind. Dies gilt auch für die Verpackung von Gütern jeder Art, die erst nach und nach verbraucht werden.

### Beispiele:

### Methode zur Bestimmung der Verbundhaftung

Die Verbundhaftung zwischen den jeweiligen Schichten, wie zwischen der Schicht aus Haftklebstoff c) und der angrenzenden Siegelschicht a) bzw. dem angrenzenden mehrlagigen Schichtverbund umfassend die Schicht a), bzw. zwischen der Trägerschicht b) und der Haftklebstoffschicht c), der für ein Verpackungselement verwendeten Mehrschichtfolie wird in Anlehnung an die Testmethode FINAT Nr. 2 gemessen. Dazu wird die zu prüfende Mehrschichtfolie zunächst gegen das zweite Verpackungselement gesiegelt. Daraus werden mit einem Streifenschneider Streifen mit einer Breite von 15 mm und einer Länge von 60 mm geschnitten. An den zu prüfenden Streifen der gesiegelten Mehrschichtfolie wird mechanisch eine Trennung in der Mehrschichtfolie zwischen den in Frage kommenden Schichten, wie z.B. zwischen der Schicht aus Haftklebstoff c) und der angrenzenden ggfs. mehrlagigen Siegelschicht a) oder der Haftklebstoffschicht c) und der Trägerschicht b) bis zum Siegelnahtbereich durchgeführt und die Streifen auf eine Standardtestplatte mit Hilfe eines doppelseitig klebenden Bandes geklebt.

Der Streifen wird danach in der Zugprüfungsmaschine so befestigt, dass die voneinander getrennten Folienverbunde einen Winkel von ca. 90 ° bilden und mit einer Geschwindigkeit von 300 mm/min getrennt werden können. Die Messstrecke beträgt 20 mm. Innerhalb der Messstrecke von 20 mm des Siegelbereichs wird die mittlere Kraft und die maximale Kraft zur Trennung bestimmt.

Als Meßgeräte für die Prüfung der Verbundhaftung werden
- eine rechnergesteuerte Zugprüfungsmaschine Zwick 1435 (Kraftmesskopf 50 N),
- eine Rollenhalterung für Abzug 90 °,
- eine planparallele Standard-Testplatte aus Stahl,
- ein Klebeband tesafix 4960 (Fa. Beiersdorf), Breite 50 mm, zum Fixieren der Probe
verwendet.

Die Verbundhaftung entspricht der mittleren Kraft, die benötigt wird, die vorstehend voneinander getrennten Folienverbunde mit einem Trennwinkel (90°) und der angegebenen Geschwindigkeit im Siegelbereich zu trennen. Diese Kraft wird in N/ mm x Streifenbreite angegeben.

### Methode zur Bestimmung der Siegelnahtfestigkeit

Die Messung der Siegelnahtfestigkeit zwischen den beiden Verpackungselementen erfolgt nach derselben Methode und mit Hilfe derselben Apparatur wie sie für die Messung der Verbundhaftung beschrieben ist. Dazu werden die Teststreifen mit einer Breite von 15 mm und einer Länge von 60 mm geschnitten. Die Trennung der Teststreifen aus den beiden, miteinander versiegelten Verpackungselementen erfolgt zunächst so, dass die nicht verbundenen, lose aufeinanderliegenden Teile des aufgeklebten Teststreifens bis zum Siegelbereich aufgeklappt und in die Zugprüfmaschine so eingespannt werden, dass sie einen Winkel von 90° bilden. Dann werden sie mit einer Geschwindigkeit von 300 mm/min. voneinander getrennt. Die Messstrecke beträgt 20 mm. Innerhalb der Messstrecke von 20 mm des Siegelbereichs wird die mittlere und die maximale Kraft zur Trennung der Siegelung bestimmt.

Die Siegelnahtfestigkeit entspricht der mittleren Kraft, die benötigt wird, die beiden Verpackungselemente im Siegelbereich mit einem Trennwinkel von 90° und der angegebenen Geschwindigkeit zu trennen. Diese Kraft wird in N/mm x Streifenbreite angegeben.

### Methode zur Bestimmung des Öffnungsverhaltens

Das Öffnungsverhalten einer wiederverschließbaren Verpackung wird durch Messung der maximalen Kraft (in N) ermittelt, die notwendig ist, um die Verpackung zu öffnen.

Als Messgerät wird eine Rechnergesteuerte Zugprüfmaschine Zwick 1439 (Kraftmesskopf 500 N) eingesetzt. Die Zugprüfmaschine weist eine flexible Prüfeinrichtung aus zwei Klemmen auf, die jeweils zum Einspannen des Laschenbereichs der beiden Verpackungselemente verwendet werden, wobei die eine Klemme durch ein Band mit der festen Einspannung der Zugprüfmaschine und die andere Klemme durch ein Band mit dem Kraftmesskopf der Zugprüfmaschine verbunden ist.

Zur Prüfung werden die beiden jeweils in einer Klemme eingespannten Laschen mit einer Geschwindigkeit von 600 mm/min geöffnet, wobei der Öffnungswinkel bei Beginn der Messung 180° beträgt und während der Prüfung nicht verändert wird. Beim Hochfahren der Traverse wird die Packung geöffnet und die maximale Kraft ermittelt, die dazu notwendig ist. Der Öffnungsweg beträgt 100 mm.

Die Messmethode hat eine Genauigkeit bei der Kraftmessung von 1 % und bei der Geschwindigkeit 10 mm/min.

### Beispiel 1

Aus einer Mehrschichtfolie bestehend aus einer Polypropylenschicht mit einer Schichtdicke 500 µm und einer Siegelschicht aus Polyethylen mit einer Schichtdicke von 50 µm wurden auf einer Form- Füll und Siegel- Verpackungsmaschine durch Tiefziehen in line Verpackungsmulden hergestellt und gefüllt.

Diese Verpackungsmulden wurden mit einer Mehrschichtfolie bestehend aus einer biaxial gereckten Polypropylenschicht als Trägerschicht b) mit einer Schichtdicke von 40 µm, einer Haftklebstoffschicht c) basierend auf Kautschuk mit einer Schichtdicke von 15 µm, die mit einer mehrlagigen Siegelschicht a), bestehend aus einer Schicht aus Polyethylen mit einer Schichtdicke von 15 µm, die mit 1 Gew %, bezogen auf das Gewicht der Schicht, des Laserpigmentes Laserflair 800^{®} dotiert war, einer Haftvermittlerschicht, einer Migrationsbarriereschicht aus Ethylen-Vinylalcohol-Copolymerisat mit einer Schichtdicke 2 µm, einer Haftvermittlerschicht und einer Schicht aus Polyethylen, die mit 1 Gew %, bezogen auf das Gewicht dieser Schicht, des Laserpigments Lazerflair 800^{®} dotiert war, und eine Schichtdicke von 15 µm aufwies, in line in der Siegelstation bei einem Siegeldruck von 5 bar, einer Siegeltemperatur von 145°C und einer Siegelzeit von 1,5 sec. verschlossen. Die Deckelfolie wurde im Bereich der Öffnungshilfe, die als Lasche ausgebildet war, mit Hilfe eines CO₂-Lasers bei einer Wellenläge von 10.600 nm durch Anbringen einer Schwächungslinie in Form von aneinander gereihten Mikroporen, deren Eindringtiefe durch die Dotierung mit dem genannten Laserpigment, insbesondere bis in der Schicht vor der Haftklebstoffschicht c) gesteuert wurde, in einem geradlinigen Verlauf im wesentlichen am Innenrand der Siegelnaht anschließend im Bereich der Öffnungslasche ausgerüstet. Die Verpackung ließ sich gut öffnen und wieder verschließen.

### Beispiel 2

Wie in Beispiel 1 beschrieben wurden aus der dort angegebenen Mehrschichtfolie in line Verpackungsmulden durch Tiefziehen hergestellt, die in einer Siegelstation entsprechend den bereits angegebenen Siegelbedingungen mit einer Mehrschichtfolie als Deckelfolie verschlossen wurden.

Die Deckelfolie hatte einen Aufbau wie in Beispiel 1 angegeben, wobei aber die mehrlagige Siegelschicht in ihren Polyethylenschichten als Laserpigment Lazerflair 825^{®} mit jeweils 1 Gew %, bezogen auf das Gewicht der Schicht, aufwies. Diese Mehrschichtfolie war bereits vor dem Versiegeln mit Hilfe eines Nd: YAG-Lasers im Bereich der späteren Öffnungshilfe mit einer Schwächungslinie aus aneinander gereihten Mikroporen, deren Eindringtiefe bis zur Haftklebstoffschicht reichte, ausgerüstet worden. Diese Schwächungslinie, die geradlinig in Gestalt eines "M", dessen mittlere Spitze nach dem Versiegeln zur Verpackungsmitte zeigte und im Bereich der als Lasche ausgebildeten Öffnungshilfe positioniert war, verlief insgesamt innerhalb des Innenrandes der zum Verschließen der Verpackung in der Siegelstation angebrachten Siegelnaht. Der zum Einsatz kommende Neodyn: YAG-Laser wurde bei einer Wellenlänge von 532 nm betrieben. Die Verpackung ließ sich gut öffnen und wieder verschließen.

### Beispiel 3

A) Wie in Beispiel 1 beschrieben wurden aus einer Folie aus amorphem Polyethylenterephthalat mit einer Schichtdicke von 500 µm durch Tiefziehen Verpackungsmulden hergestellt. Diese Verpackungsmulden wurden nach dem Befüllen mit einer Mehrschichtfolie aus einer biaxial orientierten Polyethylenterephthalat-Trägerschicht b) mit einer Schichtdicke von 50 µm, einer Schicht basierend auf Kautschuk als Haftklebstoffschicht c) mit einer Schichtdicke von 20 µm und einer Siegelschicht a) aus mehrlagigen, biaxial orientiertem Copolyester mit einer Schichtdicke von 15 µm, in der bereits mit Hilfe eines CO₂-Lasers mit einer Wellenlänge von 10.500 nm eine Schwächungslinie in Form von überlappenden Mikroporen mit einer Eindringtiefe von ungefähr 95% der Schichtdicke im späteren Bereich der Öffnungslasche innerhalb des Innenrandes der späteren Siegelnaht angebracht worden waren, als Deckel verschlossen. Dabei betrug die Siegeltemperatur 180°C, der Siegeldruch 5 bar und die Siegelzeit 1,5 sec.
B) Entsprechend den Angaben in A) wurden Verpackungen aus denselben Verpackungsmaterialien hergestellt, wobei der Deckel keine Schwächungslinie durch gelaserte Mikroporen aufwies.
Sowohl von einer Verpackung gemäß A) als von einer Verpackung gemäß B) wurde gemäß der vorstehend angegebenen Methode des Öffnungsverhaltens durch Bestimmung der maximalen Kraft zum Öffnen der Verpackung ermittelt.
Zum Öffnen einer
Verpackung B) war eine maximale Kraft von 67 N,
zum Öffnen einer
Verpackung A) war nur eine maximale Kraft von 28 N
notwendig.

Mit Hilfe der Schwächungslinie aus gelaserten Mikroporen konnte gezielt und in line bei deren Produktion das Öffnungsverhalten der wiederverschließbaren Verpackung gezielt verbessert eingestellt werden.

## Patentansprüche

1. Eine wiederverschließbare Verpackung aus zwei miteinander verbundenen Verpackungselementen X), und Y), wovon eines der beiden Verpackungselemente eine Mehrschichtfolie umfassend eine ggf. mehrschichtige Siegelschicht a), eine Trägerschicht b) und eine dazwischenliegende Haftklebstoffschicht c) und das zweite Verpackungselement ein filmförmiges Kunststoffmaterial mit oder ohne Siegelschicht aufweist, wobei die beiden Verpackungselemente X), und Y), über ein Versiegeln der Siegelschicht(en) derart miteinander verbunden sind, dass die Siegelnahtfestigkeit im Siegelnahtbereich größer ist als die Verbundhaftung zwischen der Haftklebstoffschicht c) und der ggf. mehrlagigen Siegelschicht a) bzw. diese Verbundhaftung auch größer ist als die Verbundhaftung zwischen der Haftklebstoffschicht c) und der an diese Schicht angrenzende Trägerschicht b) bzw. die Kohäsion der Haftklebstoffschicht c) jeweils kleiner ist als die Siegelnahtfestigkeit bzw. jede der genannten Verbundhaftungen, wodurch beim ersten Öffnen der Verpackung die versiegelte Siegelschicht a) sich im Siegelnahtbereich ggf. zusammen mit zumindest einem Teilschichtstück der Haftklebstoffschicht c) ablöst und von der angrenzenden nicht versiegelten Siegelschicht a) heraustrennt, die Haftklebstoffschicht dort freigelegt und nach Entnahme eines Teils des Füllgutes ein Wiederverschließen der Verpackung durch Andrücken ermöglicht wird, **dadurch gekennzeichnet, dass** zumindest an dem näher zum verpackten Füllgut verlaufenden Rand der Siegelnaht zumindest im Bereich der Öffnungshilfe wenigstens eine vorzugsweise zur Siegelnaht im Wesentlichen parallel verlaufende Schwächung der die Haftklebstoffschicht c) aufweisenden Mehrschichtfolie in Form von in der Siegelschicht a) durch Laserstrahleinwirkung erzeugten Mikroporen vorhanden ist.

2. Eine wiederverschließbare Verpackung nach Anspruch 1, **dadurch gekennzeichnet, dass** die Mikroporen eine Tiefe von wenigstens 50 %, bevorzugt wenigstens 80 %, besonders bevorzugt bis maximal 99 % der Dicke der Siegelschicht a) aufweisen.

3. Eine wiederverschließbare Verpackung nach Anspruch 1 oder 2, **dadurch gekennzeichnet, dass** die Schwächung im Wesentlichen aus aneinandergereihten, sich ggfs. überlappenden Mikroporen, vorzugsweise als eine Schwächungslinie, vorliegt.

4. Eine wiederverschließbare Verpackung nach einem der Ansprüche 1 bis 3, **dadurch gekennzeichnet, dass** entweder das Verpackungselement X), oder Y), auf einer Mehrschichtfolie basiert, die
a) eine ggf. mehrlagige Siegelschicht als Oberflächenschicht,
b) eine Trägerschicht als zweite Oberflächenschicht,
c) eine innenliegende Haftklebstoffschicht, die zwischen der Siegelschicht a) und der Trägerschicht b) angeordnet ist,
d) ggf. eine Migrationsbarriereschicht, die zwischen der Siegelschicht und der Haftklebstoffschicht angeordnet, und vorzugsweise eine Lage der Siegelschicht a) mit vorzugsweise einer Sauerstoff- und/oder Wasserdampf-Barrierewirkung ist, und
e) ggf. eine Gasbarriereschicht,
aufweist.

5. Eine wiederverschließbare Verpackung nach einem der Ansprüche 1 bis 4, **dadurch gekennzeichnet, dass** die Haftklebstoffschicht c) der Mehrschichtfolie auf einem druckempfindlichen Klebstoff basiert.

6. Eine wiederverschließbare Verpackung nach Anspruch 5, **dadurch gekennzeichnet, dass** die Haftklebstoffschicht c) auf wenigstens einem Polymeren ausgewählt aus der Gruppe umfassend Polymere und Copolymere von Acrylsäureestern, Polymere und Copolymere von Vinylethern, Copolymere aus Butadien und Styrol, bevorzugt Styrol-Butadien-Styrolcopolymere (SBS), Copolymere aus Styrol und Isopren, bevorzugt Styrol-Isopren-Styrol-Blockcopolymere (SIS), Copolymere aus Styrol-Butadien und Ethylen, bevorzugt Styrol-Ethylen-Butadien-Styrol-Blockcopolymere (SEBS), Polyvinylacetate, Polyurethane, Polychloroprene, Polyisobutylene, Polyisoprene, Butylkautschuck und Naturlatex basiert.

7. Eine wiederverschließbare Verpackung nach Anspruch 5 oder 6, **dadurch gekennzeichnet, dass** die Dicke der Schicht c) 2 bis 30 µm, bevorzugt bis zu 20 µm, beträgt.

8. Eine wiederverschließbare Verpackung nach einem der Ansprüche 4 bis 7, **dadurch gekennzeichnet, dass** die Migrationsbarrierschicht d) und die Gasbarriereschicht e) jeweils über Haftvermittlerschichten jeweils mit der angrenzenden Schicht verbunden sind.

9. Eine wiederverschließbare Verpackung nach einem der Ansprüche 4 bis 8, **dadurch gekennzeichnet, dass** die Gasbarriereschicht e) der Mehrschichtfolie eine Sauerstoffbarriereschicht, bevorzugt auf Basis eines Ethylen/Vinylalkohol-Copolymerisates, Vinylidenchlorid-Copolymerisates, eines Polyvinylidenchlorids, eines Polyvinylalkohols, eines vorzugsweise aufgedampften Si0x oder Al0x ist.

10. Eine wiederverschließbare Verpackung nach einem der Ansprüche 1 bis 9, **dadurch gekennzeichnet, dass** die ggf. mehrlagige Siegelschicht a) wenigstens auf einem Polymer ausgewählt aus der Gruppe umfassend Polyolefine, Polyester, Copolyester oder Olefincopolymeren basiert.

11. Eine wiederverschließbare Verpackung nach Anspruch 10, **dadurch gekennzeichnet, dass** die Siegelschicht a) auf wenigstens einem Polymeren ausgewählt aus der Gruppe umfassend Polyethylene, vorzugsweise Polyethylene hoher Dichte (HDPE), Polyethylene niedriger Dichte (LDPE) und lineare Polyethylene niedriger Dichte (LLDPE), Copolyester, Polyester, Ethylen/Propylen-Copolymerisate, Ethylen/Vinylacetat-Copolymerisate, Copolymerisate aus Ethylen und Estern der Acrylsäure oder Methacrylsäure, Copolymerisate aus Ethylen- und Acrylsäure oder Methacrylsäure sowie deren Salze, bevorzugt Natrium- oder Magnesium-Salze, und Styrol-Copolymerisate basiert.

12. Eine Verpackung nach einem der Ansprüche 1 bis 11, **dadurch gekennzeichnet, dass** die Erweichungstemperatur der Siegelschicht a) um wenigstens 5°C niedriger ist als die des Kunststoffmaterials des zweiten Verpackungselements, sofern das zweite Verpackungselement keine Siegelschicht aufweist.

13. Eine wiederverschließbare Verpackung gemäß einem der Ansprüche 1 bis 12, **dadurch gekennzeichnet, dass** die Dicke der Siegelschicht a) 5 bis 80 µm, besonders bevorzugt 10 bis 30 µm beträgt.

14. Eine wiederverschließbare Verpackung nach einem der Ansprüche 4 bis 12, **dadurch gekennzeichnet, dass** die Trägerschicht b) auf einem thermoplastischen Polymerisat, vorzugsweise einem Polyolefin, Polyester oder Polyamid basiert und ggfs. biaxial orientiert ist.

15. Eine wiederverschließbare Verpackung nach einem der Ansprüche 1 bis 14, **dadurch gekennzeichnet, dass** das Verpackungselement mit der Schwächung ein thermogeformter Verpackungsbehälter, vorzugsweise eine Verpackungsmulde, oder ein ggf. geformtes Verschlusselement, vorzugsweise der Deckel, der wiederverschließbaren Verpackung ist.

16. Eine wiederverschließbare Verpackung nach Anspruch 15, **dadurch gekennzeichnet, dass** das andere Verpackungselement ohne Schwächung auch auf einer siegelbaren Mehrschichtfolie basiert, die keine Haftklebstoffschicht aufweist und
a') eine Siegelschicht als Oberflächenschicht,
b') eine Trägerschicht als zweite Oberflächenschicht und
c') ggf. eine Gasbarriereschicht, die zwischen der Siegelschicht a') und der Trägerschicht b') angeordnet ist,
umfasst.

17. Eine wiederverschließbare Verpackung nach Anspruch 16, **dadurch gekennzeichnet, dass** die Siegelschicht a') der Siegelschicht a), die Trägerschicht b') der Trägerschicht b) und die ggf. vorhandene Gasbarriereschicht c') der Gasbarriereschicht c) der Mehrschichtfolie des mit einer Schwächung versehenen, anderen Verpackungselementes zumindest in der Polymerzusammensetzung entspricht.

18. Eine wiederverschließbare Verpackung nach einem der Ansprüche 1 bis 15, **dadurch gekennzeichnet, dass** das andere Verpackungselement ohne Schwächung auf einem filmförmigen Kunststoffmaterial ohne Siegelschicht basiert.

19. Eine wiederverschließbare Verpackung nach Anspruch 18, **dadurch gekennzeichnet, dass** das filmförmige Kunststoffmaterial des zweiten Verpackungselementes aus wenigstens einem thermoplastischen Polymerisat aufgebaut ist.

20. Eine wiederverschließbare Verpackung gemäß Anspruch 18 oder 19, **dadurch gekennzeichnet, dass** das thermoplastische Polymerisat wenigstens ein Polymerisat ausgewählt aus der Gruppe umfassend Polyolefine, bevorzugt Polypropylene, Olefin-Copolymerisate, Polyester, bevorzugt Polyethylenterephthalat (PET) oder Polybutylen-terephthalat (PBT), Copolyester, Polystyrole, Polyurethane, Polycarbonate, Polyvinylchloride, Polyvinylidenchloride oder Polyamide ist.

21. Eine wiederverschließbare Verpackung nach Anspruch 19 oder 20, **dadurch gekennzeichnet, dass** die Erweichungstemperatur des thermoplastischen Polymerisats wenigstens 100°C beträgt.

22. Eine wiederverschließbare Verpackung nach einem der Ansprüche 18 bis 20, **dadurch gekennzeichnet, dass** die Erweichungstemperatur der Siegelschicht a) des ersten Verpackungselementes X), um wenigstens 10°C, bevorzugt um wenigstens 15°C, besonders bevorzugt um wenigstens 20°C, niedriger als die Erweichungstemperatur des filmförmigen Kunststoffmaterials des zweiten Verpackungselementes Y) ist.

23. Eine wiederverschließbare Verpackung gemäß einem der Ansprüche 1 bis 22, **dadurch gekennzeichnet, dass** im Siegelnahtbereich die Verbundhaftung der Siegelschicht(en) um wenigstens 1,5 N/15 mm, vorzugsweise wenigstens 2 N/15 mm höher als die Verbundhaftung zwischen der Haftklebstoffschicht c) und der angrenzenden ggf. mehrlagigen Siegelschicht a) gemessen in Anlehnung an die Testmethode FINART Nr. 2 ist.

24. Ein Verfahren zur Herstellung einer wiederverschließbaren Verpackung nach einem der Ansprüche 1 bis 23, **dadurch gekennzeichnet, dass** zur Herstellung eines Verpackungselementes X), oder Y), eine Mehrschichtfolie enthaltend die Haftklebstoffschicht c) in Form einer fortlaufenden Folienbahn eingesetzt wird, die wenigstens eine Schwächung in Form von mit Hilfe von Laserstrahlen in die Siegelschicht eingebrachten, vorzugsweise aneinander gereihten Mikroporen zumindest in dem als Öffnungshilfe vorgesehenen Bereich des nicht verformten Randbereich der Verpackung aufweist und aus der durch Thermoformung, vorzugsweise durch Tiefziehen, Verpackungsbehälter, vorzugsweise Verpackungsmulden, hergestellt und nach dem Befüllen mit dem Füllgut mit der siegelbaren Mehrschichtfolie oder dem keine Siegelschicht aufweisenden filmförmigen Kunststoffmaterial als Deckel durch Versiegeln verschlossen und anschließend vereinzelt werden.

25. Ein Verfahren zur Herstellung einer wiederverschließbaren Verpackung nach einem der Ansprüche 1 bis 23, **dadurch gekennzeichnet, dass** die eine Haftklebstoffschicht c) enthaltende Mehrschichtfolie in Form einer fortlaufenden Folienbahn eingesetzt wird, die bereits wenigstens eine Schwächung in Form von mit Hilfe von Laserstrahlen in die Siegelschicht eingebrachten, vorzugsweise aneinander gereihten Mikroporen zumindest in dem als Öffnungshilfe der Verpackung vorgesehenen Bereich aufweist und die nach dem Befüllen der Verpackungsbehälter, vorzugsweise der Verpackungsmulden, mit dem Füllgut durch Versiegeln mit den gefüllten Verpackungsbehältern, vorzugsweise der gefüllten Verpackungsmulden, als Verschlussdeckel verbunden werden.

26. Ein Verfahren zur Herstellung einer wiederverschließbaren Verpackung nach einem der Ansprüche 1 bis 23, **dadurch gekennzeichnet, dass** aus der bahnförmigen, eine Haftklebstoffschicht c) aufweisenden Mehrschichtfolie durch Thermoformung, vorzugsweise durch Tiefziehen, Verpackungsmulden hergestellt werden, die in line mit Hilfe eines Lasers in ihrem umlaufenden Rand wenigstens eine Schwächung in Form von in die Siegelschicht a) eingebrachten, vorzugsweise aneinander gereihten Mikroporen zumindest in dem als Öffnungshilfe der Verpackung vorgesehenen Bereich erhalten haben und nach dem Befüllen mit dem Füllgut in der Siegelstation mit der, keine Haftklebstoffschicht c) aufweisenden siegelbaren Mehrschichtfolie oder dem filmförmigen keine Siegelschicht aufweisenden Kunststoffmaterial als Deckel durch Versiegeln verschlossen werden.

27. Ein Verfahren zur Herstellung von wiederverschließbaren Verpackungen nach einem der Ansprüche 1 bis 23, **dadurch gekennzeichnet, dass** in line die aus einer siegelbaren Mehrschichtfolie, die keine Haftklebstoffschicht c) enthält oder dem filmförmigen keine Siegelschicht aufweisenden Kunststoffmaterial, hergestellten, thermogeformten, vorzugsweise tiefgezogenen Verpackungsbehältern, vorzugsweise Verpackungsmulden nach ihrer Befüllung in einer Siegelstation mit einer eine Haftklebstoffschicht c) aufweisenden Mehrschichtfolie durch Versiegeln verschlossen werden, wobei diese Mehrschichtfolie vor der Siegelstation mit Hilfe von Laserstrahlen eine Schwächung in Form von vorzugsweise aneinandergereihten, in die Siegelschicht a) eingebrachte Mikroporen wenigstens in dem als Öffnungshilfe vorgesehenen Bereich des zum Verschließen der Verpackungsmulde verwendeten Deckels erhalten worden ist.
